Europäisches Patentamt

European Patent Office

Office européen des brevets

(11) Publication number: **0 376 676 B1**

# EUROPEAN PATENT SPECIFICATION

(45) Date of publication of patent specification: **20.07.94**  (51) Int. Cl.5: **B28D 1/12**, B28D 1/24, B24D 5/12, B23D 61/00, B28D 1/10

(21) Application number: **89313586.3**

(22) Date of filing: **27.12.89**

(54) **Rotary substrate for a rotary blade.**

(30) Priority: **28.12.88 JP 335561/88**
**27.12.88 JP 169720/88**

(43) Date of publication of application:
**04.07.90 Bulletin 90/27**

(45) Publication of the grant of the patent:
**20.07.94 Bulletin 94/29**

(84) Designated Contracting States:
**DE ES FR IT SE**

(56) References cited:
**EP-A- 0 141 042**
**DE-A- 3 220 576**
**DE-U- 8 321 789**
**FR-A- 2 118 263**
**FR-A- 2 530 170**

(73) Proprietor: **OSAKA DIAMOND INDUSTRIAL CO., LTD.**
**80, Otorikitamachi 2-cho**
**Sakai-shi Osaka(JP)**

(72) Inventor: **Kawata, Azuma**
**13284-3 Kitakishima-cho**
**Kasaoka-shi Okayama-ken(JP)**
Inventor: **Koroku, Shuichiro c/o Osaka Diamond Ind.Co.,Ltd.**
**80 Ohitorikita-machi 2-cho**
**Sakai Osaka(JP)**
Inventor: **Kano, Hirofumi c/o Osaka Diamond Ind.Co.,Ltd.**
**80 Ohitorikita-machi 2-cho**
**Sakai Osaka(JP)**
Inventor: **Miyao, Ichiro c/o Osaka Diamond Ind.Co.,Ltd.**
**80 Ohitorikita-machi 2-cho**
**Sakai Osaka(JP)**

(74) Representative: **Warren, Keith Stanley et al**
**BARON & WARREN**
**18 South End**
**Kensington**
**London W8 5BU (GB)**

## Description

The present invention relates to a rotary substrate for use in a blade and a rotary blade using said substrate aiming at a damping of noises generated during a rotation and a construction of a blade useful for cutting a stone, concrete, asphalt and the like.

A rotary blade capable of damping noises has been disclosed in Japanese Patent Publication No. Sho 50-10040. In this rotary blade, a plurality of grooves having a suitable width, for example 1.5 mm, and a suitable length, for example about 10 % of an outside diameter of a saw member, are formed at regular intervals from the vicinity of a base portion toward almost a center of the blade on a circumferential edge of the rotary substrate and said respective grooves are filled with setting synthetic resins having a hardness lower than that of the rotary substrate to fixedly mount said setting synthetic resins on the grooves.

It has been described that according to this construction, low sound waves generated from said setting synthetic resin layer interfere with sound waves generated from the blade to hinder the tuning and resonance of sound waves, whereby changing simple high sounds to complicated low sounds, and thus high and sharp metal sounds are deadened, as a whole.

It is thought that actually the blade formed in the circumferential portion of the rotary substrate is rotated in high speed to produce a turbulent air flow, whereby generating sounds, and the blade receives an external force resulting from the generation of this turbulent flow to be vibrated, or receives an external force resulting from a load on a material to be cut to be compulsorily vibrated, and thus this vibration is resonant with the vibration of the rotary substrate to generate large sounds. In this respect, it seems that according to said Japanese Patent Publication No. Sho 50-10040, a plurality of grooves are formed from the vicinity of the base portion toward almost the center of the blade portion and filled with setting synthetic resins having a hardness lower than that of this blade to act as a buffer zone for the propagation of vibration, whereby partially stopping the propagation of vibration in the rotary substrate, and thus reducing also the resonance.

However, according to said Japaneses Patent Publication Sho 50-10040, the buffer zone of vibration is arranged in a radial direction from the center, so that the vibration resulting from the blade portion is damped in the circumferential direction on the rotary substrate but the vibration generated in the blade portion is reflected in the central portion, whereby the generated vibration can not be sufficiently damped.

FR-A-2 118 263 discloses a rotary substrate for a rotary blade having a plurality of radially extending slits each of which is joined at one of its extremities to the extremity of at least one other radial slit by a slitted region formed as a segment of a circle centred on the central axis of the rotary substrate. Since alternate groups of the radial slits are respectively joined at their outer ends and at their inner ends, the configuration formed by the series of interconnected slits overlap in both the radial and circumferential directions.

However, because of the number and extent of the slits the overall mechanical strength of the rotary substrate is considerably weakened.

It is an object of the present invention to damp the vibration resulting from the blade (saw toothed-portion) in the circumferential portion of the rotary substrate causing the increased vibration in not only the circumferential direction on the rotary substrate but also the direction toward the center from the circumferential portion of the rotary substrate.

The invention consists in a rotary substrate for a rotary blade, wherein said substrate is of circular plate-like form and has two sets of slits extending therethrough, comprising a plurality of circumferentially extending first slits formed at regular intervals about a first outer circumference adjacent the periphery of the rotary substrate and a plurality of circumferentially extending second slits formed about a second inner circumference positioned inside of the first slits and overlapping adjacent first slits in the circumferential direction characterized in that the shape of both said first slits and said second slits, as seen from the side of the substrate, is substantially semi-circular with the first slits lying radially outwardly of said first circumference and the second slits lying radially inwardly of said second circumference and such that said first slits lie between their centre of curvature and the outer periphery of said substrate and said second slits lie between their centre of curvature and the centre of rotation of said substrate, that is to say said first slits and said second slits have their open sides facing each other and in that said first slits and said second slits do not overlap in the radial direction and that the radial distance ($\ell$) between them is greater than 0, said slits being filled with a filler to integrate the slits with the rotary substrate.

In addition, according to a preferred embodiment of the present invention, grooves formed between the blades carried at the outer periphery of said substrate are also filled with the filler in a similar manner to integrate the rotary blade.

In the accompanying drawings.

Fig. 1 is a plan view showing a preferred embodiment of a rotary substrate for use in a blade according to the present invention;

Fig. 2(a) is an enlarged view showing a B - B portion in Fig. 1;

Figure 2(b) is an enlarged sectional view of Fig. 1 taken along the line A - A thereof;

Fig. 3(a), (b) is a diagram showing a preferred embodiment of a rotary blade according to the present invention;

Fig. 4 is a perspective view describing a cassette structure of the blade;

Fig. 5 is a side view of Fig. 4; and

Fig. 6 is a side view showing the conventional cassette structure.

The present invention will be below described in more detail with reference to a preferred embodiment shown in the drawings.

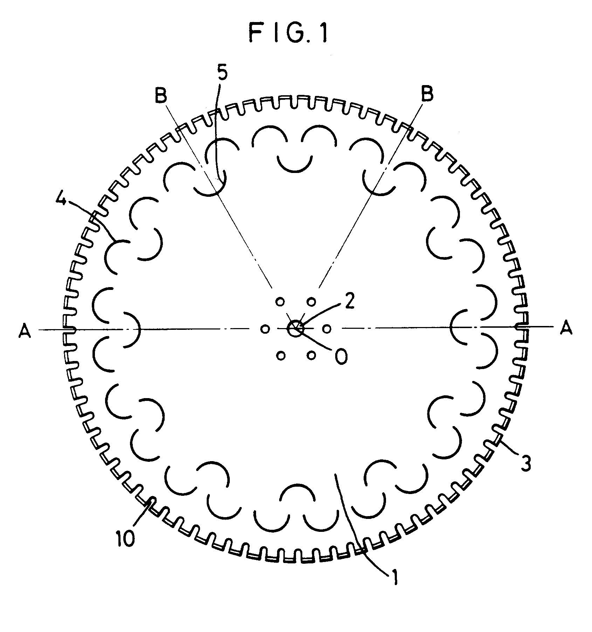

Fig. 1 shows the whole of the rotary substrate for use in the blade according to the present invention.

Reference numeral 1 designates a rotary substrate formed of a punched steel plate or stainless steel plate in a circular shape, reference numeral 2 designating an axial hole formed at a center of said rotary substrate 1, reference numeral 3 designating a blade or tooth, and reference numerals 4, 5 designating first and second semicircular slits, respectively.

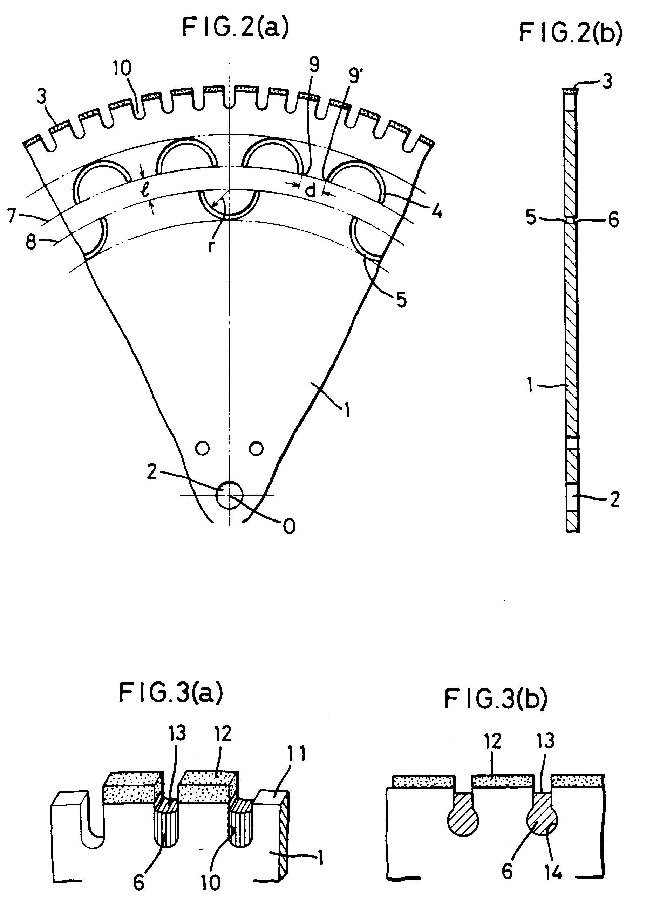

Fig. 2 (a) is an enlarged view showing a portion surrounded by B - B in Fig. 1 and Fig. 2 (b) is an enlarged sectional view of Fig. 1 taken along the line A - A thereof. Referring to Fig. 2, reference numeral 6 designates fillers.

As shown in Fig. 1, in the present preferred embodiment 24 first slits 4 and 12 second slits 5 are formed. A thickness of the substrate is for example 4 to 9.5 mm and a diameter is for example 30 to 100 inches (75 to 254 cm).

A first circumference 7 is set up in the vicinity of an outer edge of the rotary substrate 1 with a center of the rotary substrate 1 as 0 and 24 semicircular slits 4 are formed all over an outside circumference of said first circumference 7 with this as the standard. In this time, an interval d between ends 9, 9′ of adjacent slits 4 is set so as to be smaller than 2 times an inside radius r of the formed semicircular slits 4.

The respective semicircular slits 4 have a shape opened in a direction toward the center 0 of the rotary substrate 1 and may have a circular arc slightly larger or smaller than a semicircle.

These semicircular slits 4 are formed by means of a laser processing machine so as to be made round at both end portions thereof and a slit width of about 0.4 mm is suitable.

The slits, which have been formed in the above described manner, are referred to as the first semicircular slits.

Subsequently, a second circumference 8 is set up inside of said first circumference 7 with the center 0 as a fundamental point and 12 semicircular slits 5, which are opened in a direction opposite to the direction in which the adjacent slits 4 are opened (opened outward) and simultaneously cross over both end portions 9, 9′ to partially interrupt the direction, in which both adjacent slits 4, 4 are opened, are formed for every two adjacent slits 4, 4 inside of the circumference 8 with this circumference 8 and radii connecting both end portions 9, 9′ of said first adjacent semicircular slits 4 with the center 0 of the substrate as standards.

The processing and the width of the slits 5 are same as those of the slits 4.

In the above described case, a difference ℓ between the first circumference 7 and the circumference 8 in diameter is dependent upon a mechanical strength of the rotary substrate 1 when subjected to a cutting load.

Such shape and arrangement of the slits lead to the possibility that the whole length of the slits themselves can be increased without decreasing the rigidity of the substrate (the rigidity of the substrate for holding the blade within an appointed plane during the high-speed rotary grinding), whereby increasing a quantity of fillers and improving the sound damping effect.

In addition, the semicircular slits 4 and 5 may be same or slightly different in diameter.

All of the semicircular slits 4, 5 are filled with fillers obtained by compounding heat resistant, pressure resistant and shake-proof sealing agents to synthetic resins . The synthetic resins to be filled, of which hardness can be regulated ranging from the rigid state to the flexible state, and which have a water-proofness to such an extent that they are difficultly soluble also in a cutting water, a strong adhesion to metals to such an extent that they are not fallen out by a centrifugal force due to the high rotation frequency and a low viscosity required for easy filling, are most suitable, and the sealing agents containing for example asbestos and glass fibers are used. Said fillers are adapted to have a hardness lower than that of the rotary substrate after set.

Besides, referring to Fig. 1 and Fig. 2 (a), (b), the blade 3 is formed by fixedly brazing and welding chips, which have been obtained by sintering diamond particles integrally with metals, to stand portions formed by U-shaped grooves 10 formed on an outer edge of the substrate 1 at regular intervals or by a cassette construction.

Here, the cassette construction of the blade is in detail described. The cutting chip has been directly fixed to the substrate in many cases but as disclosed in for example Japanese Utility Model Laid-Open No. Sho 62-198058, the chip, which is detachable by means of a fixture, and the chip having a dovetail groove type cassette construction have been known.

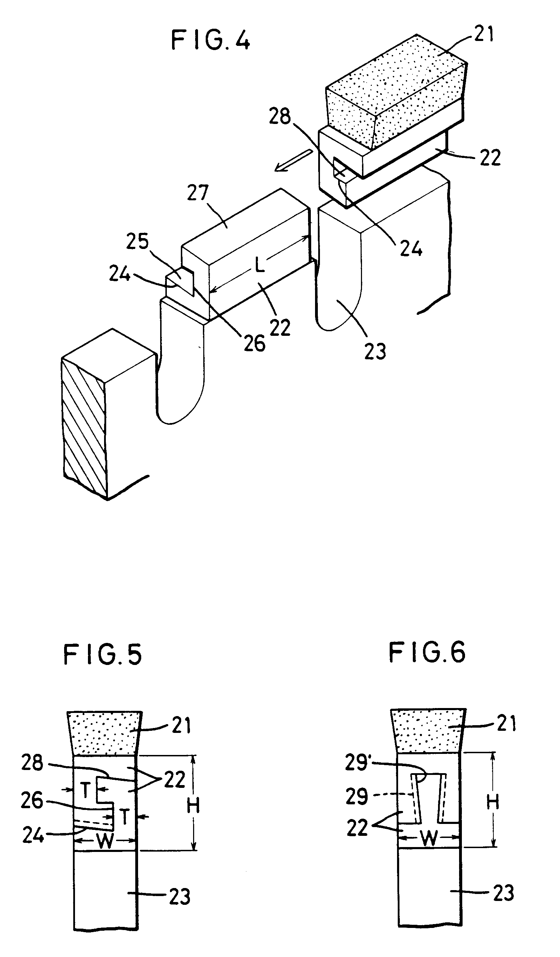

Of the conventional chips, the chip having a dovetail groove type cassette construction easily detachable as shown in Fig. 6 is most easily used. However, according to this construction, disadvantages have occurred in that a female die of a cassette stand 22 is apt to be opened to be unstable in strength under the severe operating conditions and both sides 29, 29′ of a male die and the female die are subjected to a taper machining , so that the accuracy is apt to be fluctuated and their engagement position is apt to be not fixed. In addition, in respect of a construction, the blade having a cassette construction can not be produced by casting but must be produced by machining, so that the cost is increased.

The cassette construction of the blade, which is one of the present inventions, has solved the problems described in the preceding page by changing the conventional dovetail groove type cassette, that is an up and down engagement, to the side surface engagement by means of a stand having a ⊐ letter-shaped section.

TEST EXAMPLE 1

The rotary substrates (usual substrates) having diameters of 40, 60, 72, 80 and 100 inches (about 100 to 254 cm) and thicknesses of 5.0 to 7.0 and 6.59 to 9.0 mm, said substrates with 24 first semicircular slits and 12 second semicircular slits having a width of 0.2 mm formed thereon (slitted substrates) and said substrates, in which all slits are filled with fillers comprising low-viscosity flexibility-adjustable epoxy molding resins as a main ingredient of 40 or more by weight, a hardener of 55 or less by weight and a heat resistant, pressure resistant and shake-proof sealing agent of 10 to 15 % by weight, which are subsequently set, (resin-filled substrates) were produced and tested on sound damping effect. The results are shown in Table 1.

In addition, a measuring distance was set at 1 m in a low-noise room and the A scale of NA-09 manufactured by Rione, Ltd. was used for the measurement.

Table 1

| Size (inch) cm | Usual subst. | Slitted subst. | Resin-filled subst. | Rotation frequency r.p.m. |
|---|---|---|---|---|
| 101.6cm (40in) | 101 dB | 101 dB | 92 dB | 550 |
| 152.4cm (60in) | 101 dB | 102 dB | 91 dB | 350 |
| 182.88cm(72in) | 102 dB | 102 dB | 91 dB | 300 |
| 203.2cm (80in) | 102 dB | 102 dB | 91 dB | 300 |
| 254cm (100in) | 103 dB | 104 dB | 92 dB | 230 |

On the other hand, the rotary substrate having the size of 40 inches (about 100 cm), which is shown in said Table 1, with four grooves of 1.5 mm wide and 4 inches (about 10 cm) long shown in said publication formed from the vicinity of the base portion of the saw-toothed portion toward the center and then filled with the synthetic resin fillers having the same composition as said fillers was produced and tested on sound damping effect under the same conditions with the result of 94 dB.

Next, the rotary blade according to the present invention using said slitted substrate is described with reference to Fig. 3(a), (b).

Fig. 3(a) shows a portion corresponding to the circumferential blade of the substrate shown in Fig. 1. Reference numeral 10 designates U-shaped grooves, slots or notches formed on the outer edge of the substrate 1 at regular intervals which let ground powders go and serve as radiating portions. Chips 12 obtained by sintering diamond powders integrally with metals or by sintering tungsten carbide are fixedly brazed and welded to the whole stand 11 formed of said U -shaped grooves 10 to form the blade or the blade is formed by the cassette construction.

According to the present invention, subsequently, the U letter-shaped grooves 10 are filled with fillers 6 having the same composition as the fillers used in said description. However, their composition may be not always same as that of the fillers used in said description. In this case, an upper surface 13 of the fillers 6 is adapted to be within the groove and leave the groove having room for depth between the preceding chip 12 and the subsequent chip 12.

Fig. 3(b) shows the rotary blade provided with a key groove or slot 14 in place of the U-shaped groove in said preferred embodiment shown in Fig. 3(a). As to the fillers 6, both are same.

Thus, the rotary blade is formed.

## TEST EXAMPLE 2

24 first semicircular slits and 12 second semicircular slits were formed on the rotary substrate having a diameter of 40 inches and a thickness of 5.0 mm according to said TEST EXAMPLE, the respective slits being filled with fillers, chips being fixedly mounted on the whole stand portion on the circumference of the rotary substrate, and U letter-shaped grooves being filled with the fillers to produce a rotary blade by way of trial. The resulting rotary blade was rotated at 550 r.p.m. without applying a grinding load with the result that the noise amounted to 92 dB as measured by the same method as in said TEST EXAMPLE 1 for both the rotary substrate and the rotary blade.

The latter was ground with loading with the result that the noise amounted to 100 dB as measured in the same manner. It was found from this that the noise was reduced by about 10 dB or more in comparison with that of the conventional rotary substrate having the same shape and subjected to no sound damping measure.

## TEST EXAMPLE 3

Referring to Figs. 4, 5, reference numeral 23 designates an outside portion of a substrate of a blade made of an iron plate and the like, a cassette stand 22 having a ⊐ letter-shaped section being fixedly mounted on an end face of said outside portion 23 of the substrate by welding and the like. Reference numeral 21 designates cutting chips obtained by bonding super grinding material particles, such as diamond particles, with metals. A cassette stand 22 having a ⊐ letter-shaped section is fixedly mounted on an inside end face of said cutting chips 22. Both cassette stands 22, 22 have one side of two upper and lower sides longer than the other side so that they may be intertwinedly engaged with each other at ⊐ letter-shaped portions thereof and they are fixedly mounted on a substrate and a chip, respectively, on an outside of the longer side.

An acute-angled taper 24 is formed in a sectional direction and a tapered surface 25 inclined in an opposite direction in correspondence to said acute-angled taper 24 is formed in a longitudinal direction on an inside of the longer side.

The shorter side 27 is engagedly put in a ⊐ letter-shaped concave portion 26 of the other party, so that a plane 28 corresponding to said taper 24 and said tapered surface 25 in the sectional direction and a direction meeting at right angles with the sectional direction is formed.

In addition, a plurality of cassette stands 22 are fixedly mounted on an outside end of the substrate 23 at intervals, as shown in Figs. 4, 5, but the tapered direction of the tapered surface 25 is same one.

And, the cassette stands 22 fixedly mounted on a large number of cutting chips 21 are taperedly engaged with the substrate 23 in a direction shown by an arrow in Fig. 4 to be bonded integrally with the substrate 23.

It goes without saying that a direction of rotation or direction of advance of the substrate during the cutting is opposite to the direction shown by the arrow and the bonding strength is high. The cassette stand having the above described construction can be easily produced by shaving soft steel materials and the like, the powder metallurgy and the casting.

In addition, although the taper 24 in the sectional direction is formed on two ⊐ letter-shaped sides and the tapered surface 25 in the direction meeting at right angles with the sectional direction is formed on merely one side, the contrary arrangement may be adopted and also the tapered surface 25 may be formed on two sides.

The comparison test results of the strength of the stands according to the preferred embodiments according to the present invention shown in Figs. 4, 5 and the conventional stand shown in Fig. 6 are shown in Table 2.

Table 2

|  | EXAMPLES | Conventional example | Note |
|---|---|---|---|
| Lateral bending strength | 564 kg | 439 kg | The greater value is better. |
| Force required for drawing out the stand striken in the direction shown by an arrow in Fig. 4 by means of a hammer | 255 kg | 230 kg | do. |
| Length of the stand withdrawn when a load of 1.0 ton was applied in the same direction as in the above described item | 2.22 mm | 2.87 mm | The smaller value is better. |

| Length of the stand withdrawn when a load of 2.5 tons was applied in the same direction as in the above described item | 5.64 mm | The stand is disconnected to make the measurement impossible. | do. |
|---|---|---|---|
| Force required for drawing out the stand striken in the same direction as in the above described item by a load of 1.0 ton | 664 kgf | 452 kgf | The greater value is better. |

As obvious from the above described results, the present invention can not exhibit the effects thereof until the formed semicircular slits are filled with the fillers containing the synthetic resins and the sealing agents to integrate the semicircular slits with the substrate. In addition, it can be found that the rotary substrate according to the present invention exhibits a sufficient sound damping effect in comparison with the conventional rotary substrate in which the grooves extending toward the center are filled with the synthetic resins.

In addition, the rotary blade, in which the rotary substrate according to the present invention is used, the blade being fixedly mounted on the stand portion formed on the circumference of the substrate, and the grooves between the blades being filled with the fillers, exhibits a sufficient sound damping effect in the above described manner and can improve the working environment where this kind of rotary blade is used.

Furthermore, the cassette construction of the blade is achieved by the side surface engagement, in which the ⊐ letter-shaped insides of the cassette stands having a ⊐ letter-shaped section are intertwined, so that it is more stable in comparison with the conventional up and down engagement by means of the dovetail grooves and can be easily produced in higher dimensional accuracy, whereby being capable of stably using without difficulty in the installation and detachment thereof.

Besides, in respect of the construction, not only it is easier in shaving in the machining in comparison with the dovetail grooves but also it can be produced also by the powder metallurgy using a press mold and the casting using a casting mold, so that also the cost of production can be reduced.

## Claims

1. A rotary substrate (1) for a rotary blade, wherein said substrate is of circular plate-like form and has two sets of slits extending therethrough, comprising a plurality of circumferentially extending first slits (4) formed at regular intervals about a first outer circumference adjacent the periphery of the rotary substrate and a plurality of circumferentially extending second slits (5) formed about a second inner circumference positioned inside of the first slits and overlapping adjacent first slits in the circumferential direction characterized in that the shape of both said first slits (4) and said second slits (5), as seen from the side of the substrate, is substantially semicircular with the first slits lying radially outwardly of said first circumference (7) and the second slits lying radially inwardly of said second circumference (8) and such that said first slits (4) lie between their centre of curvature and the outer periphery of said substrate and said second slits (5) lie between their centre of curvature and the centre of rotation (2) of said substrate, that is to say said first slits and said second slits have their open sides facing each other, and in that said first slits and said second slits do not overlap in the radial direction and that the radial distance (ℓ) between them is greater than 0, said slits (4,5) being filled with a filler (6) to integrate the slits with the rotary substrate.

2. A rotary substrate as claimed in claim 1, characterised in that the number of said first slits is twice the number of said second slits.

3. A rotary blade comprising a rotary substrate (1) as claimed in claim 1 or 2, characterized by a plurality of grooves (10,14) formed in the peripheral edge of the substrate and a blade or tooth (3) mounted on the stands formed between the grooves.

4. A rotary blade as claimed in claim 3, characterized in that the grooves (10,14) are filled with filler (6).

**Patentansprüche**

1. Ein kreisförmiger Träger (1) für ein Kreissägeblatt, wobei der Träger kreisförmig in Form einer Platte ausgebildet ist, und zwei Reihen von Schlitzen aufweist, die darauf angeordnet sind, wobei eine Vielzahl von ersten Schlitzen (4) sich auf dem Umfang in regelmässigen Abständen in einem ersten äußeren Umkreis nahe des Randes des kreisförmigen Trägers verteilen, und eine weitere Vielzahl von sich auf den Umfang verteilenden zweiten Schlitzen (5) vorhanden ist, verteilt auf einem zweiten, inneren Umfang innerhalb der ersten Schlitze, die die benachbarten ersten Schlitze in Umfangsrichtung überlappen, **dadurch gekennzeichnet**, daß die Form der ersten Schlitze (4) und der zweiten Schlitze (5) von der Seite des Trägers aus gesehen im wesentlichen halbkreisförmig ist, wobei die ersten Schlitze radial auswärts einer ersten Umfangslinie (7) liegen, und die zweiten Schlitze radial einwärts einer zweiten Umfangslinie (8), so daß die ersten Schlitze (4) zwischen ihrem Krümmungszentrum und dem äußeren Rand des Trägers liegen und die zweiten Schlitze (5) zwischen ihrem Krümungszentrum und dem Rotationszentrum (2) des Trägers liegen, und somit die ersten Schlitze und die zweiten Schlitze gegeneinander geöffnet sind, wobei die ersten Schlitze und die zweiten Schlitze sich in radialer Richtung nicht überlappen, und der radiale Abstand (1) zwischen diesem größer als 0 ist, und die Schlitze (4,5) mit einem Füllmaterial (6) ausgefüllt sind, um die Schlitze mit dem Träger zu vereinen.

2. Ein kreisförmiger Träger nach Anspruch 1, **dadurch gekennzeichnet**, daß die Anzahl der ersten Schlitze doppelt so groß ist wie die Anzahl der zweiten Schlitze.

3. Ein Kreissägeblatt, welches einen kreisförmigen Träger (1) nach Anspruch 1 oder 2 enthält, **dadurch gekennzeichnet**, daß eine Vielzahl von Vertiefungen (10,14) an der Außenkante des Trägers vorhanden sind, und eine Klinge oder ein Zahn (3) auf den Erhebungen zwischen den Vertiefungen angebracht ist.

4. Ein Kreissägeblatt nach Anspruch 3, **dadurch gekennzeichnet**, daß die Vertiefungen mit einem Füllmaterial (6) gefüllt sind.

**Revendications**

1. Substrat rotatif (1) pour une scie rotative, dans lequel ledit substrat est d'une forme de type plaque circulaire et comporte deux ensembles d'encoches se prolongeant à travers celle-ci, comprenant une multitude de premières encoches s'étendant circonférentiellement (4) formées à des intervalles réguliers autour d'une première circonférence extérieure contiguë à la périphérie du substrat rotatif et une multitude de secondes encoches s'étendant circonférentiellement (5) formées autour d'une seconde circonférence interne positionnée à l'intérieur des premières encoches et recouvrant les premières encoches contiguës dans la direction circonférentielle caractérisé en ce que la forme d'à la fois les premières encoches (4) et les secondes encoches (5) comme observé à partir du côté du substrat, est pratiquement semi-circulaire avec les premières encoches se trouvant radialement vers l'extérieur par rapport à ladite première circonférence (7) et les secondes encoches se trouvant radialement vers l'intérieur par rapport à ladite seconde circonférence (8) de sorte que lesdites premières encoches (4) se trouvent entre leur centre de courbure et la périphérie externe dudit substrat et lesdites secondes encoches (5) se trouvent entre leur centre de courbure et le centre de rotation (2) du substrat, c'est-à-dire que lesdites premières encoches et lesdites secondes encoches ont leurs faces ouvertes en regard les unes par rapport aux autres et en ce que lesdites premières encoches et lesdites secondes encoches ne se recouvrent pas dans la direction radiale et en ce que la distance radiale ($\ell$) entre celles-ci est supérieure à 0, lesdites encoches (4, 5) étant remplies avec un agent de remplissage (6) pour intégrer les encoches au substrat rotatif.

2. Substrat rotatif selon la revendication 1, caractérisé en ce que le nombre desdites premières encoches est de deux fois le nombre desdites secondes encoches.

3. Scie rotative comprenant un substrat rotatif (1) selon la revendication 1 ou 2, caractérisée par une multitude de rainures (10, 14) formées dans le bord périphérique du substrat et une scie ou des dents (3) montés sur les supports formés entre les rainures.

4. Scie rotative selon la revendication 3, caractérisée en ce que les rainures (10, 14) sont remplies avec un agent de remplissage (6).

# F I G. 1

## FIG.2(a)

## FIG.2(b)

## FIG.3(a)

## FIG.3(b)

FIG.4

21

28

22

27

24

25

24

L

23

26

22

FIG.5

21

28

22

26

T

T

H

24

W

23

FIG.6

21

29'

29

H

22

W

23